# EUROPÄISCHE PATENTSCHRIFT

(11) **EP 2 952 345 B1**
(45) Veröffentlichungstag und Bekanntmachung des Hinweises auf die Patenterteilung: **04.04.2018**
(21) Anmeldenummer: 15170686.8
(22) Anmeldetag: 04.06.2015
(51) Int. Cl.: B32B 37/12, B32B 38/14, B32B 27/10, B32B 37/00

(54) **VERWENDUNGSVERFAHREN EINER ANLAGE ZUR HERSTELLUNG VON PLATTENMATERIAL AUS PAPIER, DAMIT HERGESTELLTES PLATTENMATERIAL SOWIE ANLAGE DAZU**
METHOD OF USING AN INSTALLATION FOR THE PRODUCTION OF PANELS MADE OF PAPER, PLATE MATERIAL PRODUCED BY THE METHOD AND ASSEMBLY FOR SAME
PROCÉDÉ D'UTILISATION D'UNE INSTALLATION DESTINÉE À FABRIQUER DES MATÉRIAUX EN PLAQUES EN PAPIER, MATÉRIAUX EN PLAQUES AINSI FABRIQUÉS ET INSTALLATION ASSOCIÉE

(30) Priorität: 05.06.2014 DE 102014107941
(43) Veröffentlichungstag der Anmeldung: 09.12.2015
(73) Patentinhaber: Siggset + Print & Media AG, 79774 Albbruck (DE)
(72) Erfinder: Anhalt, Dennis, 79774 Albbruck-Unteralpfen (DE)
(74) Vertreter: Gottschalk, Matthias

(56) Entgegenhaltungen:
- EP-A1- 1 570 984
- WO-A2-2009/153680
- DE-A1- 2 728 977
- DE-A1-102007 019 851

## Beschreibung

### Einleitung

Die Erfindung betrifft ein Verfahren zur Herstellung von Plattenmaterial aus Papier sowie mit diesem Verfahren hergestelltes Plattenmaterial. Die Erfindung betrifft außerdem eine Anlage zur Herstellung solchen Materials. Insbesondere betrifft die Erfindung automatisiert hergestellte Platten aus dünnem Papier.

### Stand der Technik und Nachteile

Zur Schonung von Ressourcen wird in vielen Bereichen der Technik versucht, nicht mehr benötigte Materialien einer weiteren Verwendung zuzuführen. Hierbei wird das Recycling vom so genannten Upcycling unterschieden. Während beim Recycling eher die grundsätzliche Vermeidung von Abfällen durch Wiederverwertung im Vordergrund steht (z.B. Herstellung von grauem Toilettenpapier aus gebleichtem Drucker-Papier), werden beim Upcycling nieder- in höherwertige Materialien oder Güter überführt.

Ein Beispiel für Upcycling ist die Verwendung von (Alt-)Papier zur Herstellung von Schmuckgegenständen, wodurch das an sich niedrigwertige Papier eine signifikante Werterhöhung ("Veredlung") erfährt. Derartiger Schmuck ist seit längerem bekannt und wird beispielsweise aus alten Büchern hergestellt. Diese werden seitenweise aufgetrennt, und die Seiten werden einzeln und manuell miteinander verklebt, bis nach dem Aushärten ein solider Block vorhanden ist, der weiterverarbeitet werden kann. Nachteilig an derartigen Vorgehensweisen ist der sehr hohe manuelle Aufwand, der zur Herstellung der Halbzeuge (Papierblöcke) betrieben werden muss.

Es ist auch bekannt, aus Zeitungspapier plattenartiges Verbundmaterial zu fertigen, aus welchem dann beispielsweise Möbel hergestellt werden können. Vorteilhaft ist Zeitungspapier unter Anderem auch deswegen, weil es heute einen großen Anteil des Altpapiers ausmacht und entsprechend günstig erhältlich ist. Zudem stehen auch die Endstücke von Zeitungspapier-Rollen zum Re- bzw. Upcycling zur Verfügung, so dass das Rohmaterial günstig in Rollenform erhältlich ist. Vorteilhaft ist die Rollenform deswegen, weil Zeitungspapier aufgrund seiner sehr geringen Dicke, verbunden mit einer hohen Saugfähigkeit, eine hohe Empfindlichkeit gegen unsachgemäße Handhabung beim Verarbeiten hat.

Durch Verwendung von Rolle-zu-Rolle-Prozessen, die für gewöhnliches (nicht zu verklebendes) Zeitungspapier bekannt sind, lässt sich aber auch mit Klebstoff imprägniertes Papier ausreichend sicher handhaben. Durch die Bahnspannung in der Maschine kann Zeitungspapier nämlich von Rolle zu Rolle verklebt werden, ohne das Falten und Wellen entstehen. Die Papierbahn wird somit im Rollendruck mit Klebstoff benetzt und so auch wieder aufgewickelt. Aufgrund der permanenten Bahnspannung wellt sich das Papier nicht. Das benetzte Papier trocknet schließlich aufgewickelt auf der Rolle. Das Plattenmaterial wird gewonnen, indem Platten aus dem Tambour herausgeschnitten (z.B. gesägt) werden. Diese Notwendigkeit des Beschneidens der Tamboure (Aufwickelrolle) ist jedoch nachteilig, da verhältnismäßig viel Verschnitt anfällt und das Beschneiden der schweren und unhandlichen Rolle kompliziert ist. In der Bogenverarbeitung ist die Herstellung von Platten mit Zeitungspapier bisher nicht möglich, da sich das Papier sofort wellt, wenn es mit der Dispersion in Berührung kommt, was ein Abstapeln und Verkleben der imprägnierten Bögen unmöglich macht.

Zum Auftragen von Klebstoffen auf Papier, welches in Rollenform vorliegt, sind aufwändige Maschinen nötig, was das aus dem zunächst sehr günstigen Rohmaterial hergestellte Halbzeug sehr teuer macht.

Darüber hinaus ist aus der Offenlegungsschrift DE 10 2007 019 851 A1 ein Verfahren zum Herstellen eines flächigen bedruckten Halbzeugs für ein flächiges Bauteil bekannt, bei dem eine bedruckbare, unbedruckte Druckpapierschicht unter Druck- und Hitzeeinfluss mit einem flächigen Grundkörper verklebt wird, auf dem zuvor eine beharzte Unterschicht angeordnet worden ist.

Aus der WO 2009/153680 A2 geht ferner ein Laminierverfahren hervor, bei dem eine in einem Druckverfahren hergestellte Dekorschicht mit einer Trägerplatte verklebt wird.

### Aufgabe der Erfindung und Lösung

Die Aufgabe der Erfindung besteht in der Schaffung eines Herstellverfahrens von Plattenmaterial aus dünnen Papierbögen wie z.B. Zeitungsblättern, welches bis zum Vorliegen der geklebten Platten automatisiert abläuft. Die Aufgabe besteht außerdem in der Bereitstellung eines kostengünstigen Verfahrens.

Die Aufgabe ist ferner die Bereitstellung von Plattenmaterial aus dünnen Papierbögen wie z.B. Zeitungsblättern, welches durch ein solches Verfahren hergestellt worden ist.

Die Aufgabe besteht außerdem in der Bereitstellung einer zur Durchführung des Verfahrens geeigneten Anlage.

Die Aufgabe wird durch ein Verfahren gemäß Hauptanspruch 1, bzw. durch Plattenmaterial aus dünnen Papierbögen gemäß nebengeordnetem Anspruch 9 gelöst. Eine Anlage nach nebengeordnetem Anspruch 11 dient der Durchführung des Verfahrens. Weitere Ausführungsformen sind den jeweiligen Unteransprüchen, der Beschreibung sowie der Figur zu entnehmen.

### Beschreibung

Nachfolgend wird zunächst das erfindungsgemäße Verfahren beschrieben. Anschließend erfolgt eine kurze Beschreibung von mittels des erfindungsgemäßen Verfahrens hergestellten Gegenständen sowie der zur Herstellung verwendeten Anlage.

Das erfindungsgemäße Verfahren dient der Herstellung von Plattenmaterial aus dünnem Papier, wobei das Papier auf Rollen oder in Bögen vorliegt. Insbesondere ist hier Zeitungspapier zu nennen. Besonders bevorzugt handelt es sich bei dem dünnen Papier um Makulatur, also um bereits bedrucktes, nicht mehr benötigtes Papier. Die Dicke des Papiers beträgt vorzugsweise nicht mehr als 1 Millimeter, und besonders bevorzugt nicht mehr als 50 bis 100 Mikrometer.

Das erfindungsgemäße Verfahren umfasst die Schritte:
- Bereitstellen des Papiers in Rollen- oder Bogenform. Das Papier wird entweder auf eine Rolle oder in flächig übereinander liegenden Papierstapeln angeliefert.
- Vorlegen des Papiers einer zur Aufnahme und zum Transport des Papiers geeigneten Anlage. Das Papier wird so positioniert, dass die Anlage mit dem Papier beschickt werden kann. Es ist klar, dass es sich bei der Anlage um eine zur Verarbeitung oder Veredelung des Papiers geeignete Anlage, und nicht etwa eine Transportanlage handelt.
- Aufnehmen des Papiers mittels der Anlage. Hierzu können beliebige, aus dem Stand der Technik bekannte Hilfsmittel vorgesehen sein. Je nach Zustand des Rohmaterials wird insbesondere ein Rollenförderer oder eine Pick-and-Place-Vorrichtung in Betracht kommen.
- Transportieren des Papiers durch den Transportbereich der Anlage. Zum Transport umfasst die Anlage typischerweise eine Mehrzahl von zumindest teilweise angetriebenen Rollen, welche das Rohmaterial einziehen und vorwärtstransportieren.
- flächiges Aufbringen von Klebstoff auf mindestens einer Seite des Papiers während des Transports. Der Klebstoff dient dem späteren Verbinden der einzelnen Bögen zu Plattenmaterial. Er wird vorzugsweise ganzflächig aufgebracht. Es ist jedoch auch möglich, insbesondere die seitlichen Randbereiche der Bögen unbeschichtet zu lassen, und diese später abzuscheiden.
- ggf. Schneiden des Papiers in Bögen. Sofern es sich beim Rohmaterial um Papierrollen handelt, werden diese in Bögen unterteilt; andernfalls ist dieser Schritt obsolet. Dieser Schritt kann nach oder bevorzugt vor dem Beschichten erfolgen. Hierzu kann ein so genannter Rollenquerschneider vor dem Transportbereich der Anlage positioniert werden, welcher das zunächst auf Rollen befindliche Papier in Bögen unterteilt, welches alsdann unter Zuhilfenahme des o.g. Hilfsmittels in den Transportbereich verbracht wird.

Auf diese Weise sind am Ende des Transportbereichs der Anlage mindestens einseitig mit Klebstoff versehene Papierbögen bereitgestellt. Diese werden am Ende des Transports (bei Verlassen der Anlage) übereinandergestapelt, so dass sich ein Stapel aus mindestens einseitig mit Klebstoff beschichteten Papierbögen ergibt. Je nach gewünschter Höhe des Endproduktes (Plattenmaterial) kann die Höhe des Stapels eingestellt werden. Nach Erreichen der gewünschten Höhe wird der Stapel aus dem Transportbereich der Anlage verbracht und mittels Druck zusammengepresst. Typischerweise sind Stapel von bis zu 1,50 Metern Höhe herstellbar.

Das erfindungsgemäße Verfahren ist dadurch gekennzeichnet, dass als die Anlage zum Durchführen des Verfahrens vorgesehene Anlage eine zum Bedrucken (und nicht zum Verkleben) von Papier mit Farbe (und nicht mit Klebstoff) vorgesehene Durchlauf-Anlage verwendet wird. Mit anderen Worten, zur Herstellung des Plattenmaterials wird eine herkömmliche Durchlauf-Druckmaschine verwendet, und gerade keine spezielle, zum Auftragen von Klebstoffen vorgesehene Sondermaschine.

Es hat sich nämlich überraschenderweise gezeigt, dass es möglich ist, dass eine derartige Druckmaschine entgegen ihres eigentlichen Zweckes, nämlich dem Bedrucken von Papier mit Farben und/oder Lacken, auch zum Auftragen von Klebstoffen geeignet ist. Tatsächlich ist ein Auftragen von Klebstoffen praktisch ohne zusätzliche Umbauarbeiten an der Maschine möglich. Da derartige Maschinen in verhältnismäßig großen Stückzahlen am Markt verfügbar sind, sind ihre Kosten im Vergleich zu Sondermaschinen gering, was zu entsprechenden Kostensenkungen bei der Herstellung von Plattenmaterial aus dünnem Papier führt.

Für den erfindungsgemäßen Einsatzzweck kommen als Durchlauf-Anlage insbesondere eine Offsetdruckmaschine, eine Flexodruckmaschine, eine Rollenoffsetmaschine oder eine Laminiermaschine in Betracht.

Offsetdruckmaschinen, wie beispielsweise in Druckschrift DE 3130825 A1 oder EP 1132202 A1 offenbart, sind seit langem bekannt. Eine Offsetdruckmaschine arbeitet mit einem indirekten Flachdruckverfahren; das bedeutet, dass die auf einen Zylinder gespannte Druckplatte und das Papier nicht unmittelbar miteinander in Berührung kommen. Der vorliegend die Farbe ersetzende Klebstoff wird zunächst auf einen Gummituchzylinder, und von dort aus auf das Papier übertragen. Da dieses die Druckplatte schonende Verfahren das am weitesten verbreitete Druckverfahren ist, sind hier besonders geringe Halbzeugkosten zu erzielen.

Eine Flexodruckmaschine nutzt flexible Druckplatten, die im Rollenrotationsdruckverfahren eingesetzt werden. Die Platten bestehen typischerweise aus Gummi oder Fotopolymer, es werden niedrigviskose Druckfarben verwendet. Da es sich um ein Hochdruckverfahren handelt, ist beispielsweise auch das Aufbringen von dichten Streifen oder Mustern möglich, um beispielsweise Areale auszusparen, die später durch Aussägen aus dem Plattenmaterial (Halbzeug) verworfen werden. Vorteilhaft an den Anlagen ist unter andrem der einfache Druckwerksaufbau.

Rollenoffsetdruckmaschinen eignen sich prinzipbedingt besonders zum beidseitigen Aufbringen von Farben bzw. Klebstoffen.

Auch Laminiermaschinen, die ursprünglich zum Aufbringen von folienartigen Schutzschichten auf Papier oder Pappe vorgesehen sind, lassen sich für den erfindungsgemäßen Einsatzzweck umfunktionieren. Allerdings ist das Verfahren nicht so wirtschaftlich zu betreiben wie ein Rollenverfahren, da in einem ersten Schritt zwei Bögen in der Anlage miteinander verklebt werden müssen, um diese in einem zweiten Schritt (nach dem Verkleben) wieder in die Anlage zu geben, um eine weitere Schicht aufzukleben, etc., und zwar so oft, bis letztlich die gewünschte Stärke des Plattenmaterials entstanden ist.

Schließlich sind sogar neuere Buchdruckmaschinen, die heute vorwiegend zum Stanzen und Prägen Verwendung finden, mit geringem Umrüstaufwand für die vorliegende Aufgabe verwendbar.

Nach einer Ausführungsform des Verfahrens werden die mit Klebstoff versehenen Papierbögen mittels einer glatten Pressvorrichtung zusammengepresst. Als Resultat erhält man ebene Platten als Verbundmaterial, welches aus dünnem Papier besteht und mittels allen insbesondere für Holz geeigneten Bearbeitungsverfahren (Sägen, Fräsen, Bohren, Stanzen, Schleifen, ...) weiterbe- und verarbeitet werden kann.

Nach einer anderen Ausführungsform des Verfahrens werden die mit Klebstoff versehenen Papierbögen zwischen einer Positiv- und einer Negativform zusammengepresst. Das bedeutet, dass das daraus resultierende Plattenmaterial nicht eben, sondern entsprechend der Positiv- und Negativform gewölbt ist. Auf diese Weise lassen sich auch komplex geformte Gebilde herstellen, die bei einer Fertigung "aus dem Vollen" z.B. mittels Fräsens nicht wirtschaftlich produzierbar wären. Auch die komplexen Gebilde sind mittels der vorstehend genannten Verfahren weiterverarbeitbar.

Das dünne Papier kann je nach Bedarf bzw. nach vorhandenem Rohmaterial ganz oder teilweise unbedruckt oder bedruckt sein. Alle der oben genannten Anlagen erlauben es, unbedruckte oder bedruckte Bögen miteinander zu verkleben. Die Bögen können zuvor entweder speziell für die Herstellung des Plattenmaterials bedruckt werden, oder aber es werden Makulaturen benutzt. Ebenso können unbedruckte und gefärbte Papierbögen miteinander verklebt werden. Auch ist es möglich, weißes bzw. unbedrucktes Papier zunächst, auch in derselben Anlage, mit gewünschten Motiven zu bedrucken und anschließend wie beschrieben zu verkleben.

Nach einer bevorzugten Ausführungsform weist die Durchlauf-Anlage mindestens ein Druckwerk und ein nachfolgendes Lackwerk auf; besonders bevorzugt ist die Durchlauf-Anlage eine Offsetdruckmaschine. Das (für den Fall mehrerer Druckwerke letzte) Druckwerk bringt einen ersten Klebstoff, und das Lackwerk einen zweiten Klebstoff jeweils mindestens einseitig auf das Papier auf. Bei einer typischen Offsetdruckmaschine mit fünf Druckwerken werden demnach das fünfte Druckwerk und das Lackwerk mit zwei unterschiedlichen Klebstoffen befüllt; der Unterschied kann beispielsweise in der Viskosität liegen. Durch die geeignete Kombination der Klebstoffe ist ein Verzögern beim Trocknen der Klebstoffe erreichbar, so dass sich die Bögen erst beim Aufeinanderstapeln in der Auslage verbinden, und nicht bereits beim Durchlauf durch die Anlage. Je nach Maschinentyp wird der Klebstoff nach Auslagenlänge eingestellt.

Es ist klar, dass der Stapel während und/oder nach dem Zusammenpressen, ggf. unter Wärmeeinwirkung, aushärten gelassen wird, so dass weiterverarbeitbares Plattenmaterial aus dünnem Papier erhalten wird. Mit anderen Worten, der Stapel aus beschichteten Bögen muss eine gewisse Zeit aushärten können, damit der Klebstoff abbindet und das Plattenmaterial eine Festigkeit und einen Zusammenhalt erhält, so dass es zumindest unproblematisch transportfähig, vorzugsweise aber auch verarbeitungsfähig ist. Das Aushärten kann in der Anlage, vorzugsweise aber außerhalb der Anlage vor sich gehen, um die Anlage nicht unnötig lange zu blockieren.

Nach dem Aushärten des Plattenmaterials kann auch eine Veredelung desselben mittels Ölens, Lackierens oder Laminierens erfolgen. Auf diese Weise wird das Plattenmaterial ästhetisch und/oder funktional (z.B. wasserabweisend) aufgewertet.

Die Erfindung betrifft auch Plattenmaterial aus dünnem Papier, welches dadurch gekennzeichnet ist, dass es mittels eines vorstehend beschriebenen Verfahrens, insbesondere unter Verwendung einer herkömmlichen Druckmaschine, hergestellt worden ist. Anders ausgedrückt, die Erfindung umfasst nicht nur das erfindungsgemäße Verfahren, sondern auch mit dem Verfahren hergestellte Halbzeuge und Produkte.

Derartige Produkte können ein Wohnmöbel wie z.B. ein Tisch, eine Tischplatte, ein Stuhl, eine Sitzfläche oder ein Regal sein. Auch Sanitärmöbel wie Waschbecken, Waschtische, oder Küchenmöbel, wie Arbeitsplatten, Schränke, sowie Schlafmöbel wie Bettgestelle, sind aus dem erfindungsgemäßen Plattenmaterial herstellbar. Selbst widerstandsfähige Bodenbeläge, ein Deckenelement, ein Wandelement (Wandpaneele), oder auch Fensterbänke können aus dem Plattenmaterial bestehen oder dieses umfassen. Selbstverständlich sind auch oben bereits genannte Dekorationsartikel oder Schmuckwaren aus erfindungsgemäß gefertigtem Plattenmaterial herstellbar. Die guten physikalischen Eigenschaften von aus Papier hergestellten Plattenmaterialien lassen diese auch als Wärmedämmelemente oder Schalldämmelemente Verwendung finden.

Die Erfindung betrifft auch eine Anlage zur Durchführung des oben beschriebenen Verfahrens. Die Anlage umfasst eine Transportvorrichtung zum Transportieren von Papier durch die Anlage sowie mindestens ein Druckwerk zum mindestens einseitigen Aufbringen von Farbe auf das Papier. Sie ist erfindungsgemäß dadurch gekennzeichnet, dass sie mindestens ein Reservoir für einen Klebstoff aufweist, welcher ebenfalls mindestens einseitig auf das Papier auftragbar ist. Mit anderen Worten, eine erfindungsgemäße Anlage unterscheidet sich von einer herkömmlichen Anlage dadurch, dass anstelle oder zusätzlich zum Druckwerk ein "Klebewerk" vorhanden ist, welches anstelle der Farbe, jedoch in technisch gleicher Art und Weise zum Aufbringen des Klebstoffes verwendet wird. Es ist klar, dass eine derartige Anlage auch weitere Komponenten umfasst, die dem Fachmann jedoch wohlbekannt sind, so dass eine Beschreibung derselben unterbleiben kann. Wesentlich ist lediglich das Vorhandensein des Reservoirs für Klebstoff, und die Möglichkeit, denselben aus dem Reservoir zumindest einseitig auf das dünne Papier aufzubringen.

Besonders bevorzugt ist das mindestens eine Reservoir ein Druckwerk oder ein Lackwerk, wie sie typisch für eine herkömmliche Druckmaschine sind. Mit anderen Worten, das Druck- oder Lackwerk einer herkömmlichen Druckmaschine wird als "Klebewerk" umfunktioniert, indem das Reservoir anstatt mit Farbe mit Klebstoff befüllt wird. Daraus resultiert die Verwendbarkeit der Druckmaschine als Klebemaschine für Bögen aus dünnem Papier. Das Bereitstellen eines separaten "Klebewerks" oder entsprechenden Reservoirs entfällt vorzugsweise ganz.

Ferner umfasst die Anlage eine Schneidvorrichtung zum Schneiden des Papiers in Bögen und/oder eine Pressvorrichtung zum Zusammenpressen der mit Klebstoff versehenen Papierbögen. Zum Schneiden kann ein Rollenquerschneider verwendet werden, welcher das dann zunächst auf Rollen befindliche Papier in Bögen unterteilt, welches dann in Bogenform durch den Transportbereich der Anlage transportiert wird. Das Zusammenpressen erfolgt vorzugsweise außerhalb des Transportbereiches, da hierfür eine gewisse Verweilzeit nötig ist. Besonders bevorzugt werden die übereinandergestapelten Bögen nach Verlassen des Transportbereiches in die Pressvorrichtung überführt, wo sie in Stapeln gelagert und verpresst werden, oder der Transportbereich ist ausreichend lang und/oder mehrbahnig, um die benötigte Verweilzeit zu erlauben, ohne den Druckvorgang zu verlangsamen.

Wie dargelegt löst die erfindungsgemäße Verwendung einer Druckmaschine die Nachteile des Standes der Technik beim Herstellen von Stapeln aus miteinander verklebten dünnen Papierbögen. Das Herstellverfahren von Plattenmaterial aus dünnen Papierbögen wie z.B. Zeitungsblättern läuft bis zum Vorliegen der geklebten Platten automatisiert ab. Es ist kostengünstig, da keine Sondermaschinen dazu benötigt werden, sondern herkömmliche Druckmaschinen verwendet werden.

### Figurenbeschreibung

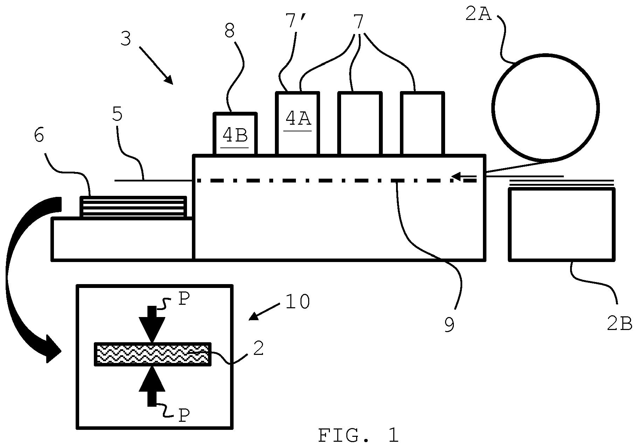

In der einzigen **Figur 1** ist schematisch eine zur Herstellung des erfindungsgemäßen Plattenmaterials 1 aus dünnem Papier 2 geeignete Durchlauf-Anlage 3 dargestellt.

Diese umfasst mehrere Druckwerke 7, 7' und ist zum Transport von in Rollenform 2A oder in Bogenform 2B vorliegendem dünnen Papier 2 geeignet. Der Transportbereich (Transportvorrichtung 9) ist schematisch durch die horizontale strichpunktierte Linie (ohne Bezugszeichen) angedeutet, verläuft aber in der Realität nicht zwingend exakt in einer solchen Ebene. Nicht dargestellt ist eine Aufnahmevorrichtung, mit welcher in Bogenform 2B vorliegendes, typischerweise als Palettenware angeliefertes Papier 2 aufgenommen werden kann.

Im letzten Druckwerk 7' ist ein erster Klebstoff 4A vorhanden, der mittels dieses Druckwerkes auf das Papier 2 aufgebracht wird. Im nachfolgend angeordneten Lackwerk 8 ist ein zweiter Klebstoff 4B vorhanden, der mittels dieses Lackwerks ebenfalls auf das Papier 2 aufgebracht wird. Die beiden Klebstoffe können auf derselben Seite oder auf unterschiedlichen Seiten aufgebracht werden.

Zumindest einseitig mit Klebstoff versehene Papierbögen 5 verlassen den Transportbereich der Anlage 3 (links im Bild). Dort werden sie übereinandergelegt und bilden einen Stapel 6, der ebenfalls auf einer Palette (nicht gezeigt) abgelegt werden kann.

Nachfolgend (angedeutet durch den geschwungenen breiten Pfeil) wird dieser Stapel 6 in einer Pressvorrichtung 10 mittels Druck P zusammengepresst, und die Klebstoffe härten aus. Das Ergebnis ist ein Plattenmaterial 1 aus dünnem Papier 2, angedeutet durch die zickzackförmige Schraffur. Das Plattenmaterial 1 kann nunmehr wie Holz mechanisch bearbeitet und gewünschtenfalls oberflächenveredelt (nicht gezeigt) werden.

Es ist klar, dass der oder die Klebstoffe 4A, 4B auch aus anderen als den genannten Druck- bzw. Lackwerken ausgegeben werden können. Es ist auch klar, dass zum Zusammenpressen der mit Klebstoff versehener Papierbögen 5 entsprechende Vorrichtungen vorzusehen sind, deren Bereitstellung für den Fachmann naheliegend und die daher nicht im Detail abgebildet sind. Diese können wie gezeigt separat, oder in die Anlage 3 integriert sein.

### Bezugszeichenliste

- 1: Plattenmaterial
- 2: Papier
- 2A: Rolle, Rollenform
- 2B: Bogen, Bogenform
- 3: Anlage, Durchlauf-Anlage
- 4A,4B: Klebstoff
- 5: mit Klebstoff versehener Papierbogen
- 6: Stapel
- 7: Druckwerk
- 7': letztes Druckwerk
- 8: Lackwerk
- 9: Transportvorrichtung
- 10: Pressvorrichtung

- P: Druck

## Patentansprüche

1. Verfahren zur Herstellung von Plattenmaterial (1) aus dünnem Papier (2), wobei das Papier (2) auf Rollen (2A) oder in Bögen (2B) vorliegt, umfassend die Schritte
- Bereitstellen des Papiers (2) in Rollen- (2A) oder Bogenform (2B),
- Vorlegen des Papiers (2) einer zur Aufnahme und zum Transport des Papiers (2) geeigneten Anlage (3),
- Aufnehmen des Papiers (2) mittels der Anlage (3),
- Transportieren des Papiers (2) durch die Anlage (3),
- flächiges Aufbringen von Klebstoff (4A, 4B) auf mindestens einer Seite des Papiers (2) während des Transports,
- ggf. Schneiden des Papiers (2) in Bögen (2B),
so dass mindestens einseitig mit Klebstoff (4A, 4B) versehene Papierbögen (5) bereitgestellt sind, welche am Ende des Transports übereinandergestapelt werden, wobei der durch das Stapeln der mit Klebstoff versehenen Papierbögen (5) erhaltene Stapel (6) mittels Druck (P) zusammengepresst wird und als die zum Durchführen des Verfahrens vorgesehene Anlage (3) eine zum Bedrucken von Papier (2) mit Farbe(n) vorgesehene Durchlauf-Anlage verwendet wird.

2. Verfahren nach Anspruch 1,
**dadurch gekennzeichnet, dass** die verwendete Durchlauf-Anlage (3) eine Offsetdruckmaschine, eine Flexodruckmaschine, eine Rollenoffsetmaschine, eine Laminiermaschine oder eine Buchdruckmaschine ist.

3. Verfahren nach Anspruch 1 oder 2,
**dadurch gekennzeichnet, dass** die mit Klebstoff versehenen Papierbögen (5) mittels einer glatten Pressvorrichtung zusammengepresst werden.

4. Verfahren nach Anspruch 1 oder 2,
**dadurch gekennzeichnet, dass** die mit Klebstoff versehenen Papierbögen (5) zwischen einer Positiv- und einer Negativform zusammengepresst werden.

5. Verfahren nach einem der vorhergehenden Ansprüche,
**dadurch gekennzeichnet, dass** das dünne Papier (2) ganz oder teilweise unbedruckt oder bedruckt ist.

6. Verfahren nach einem der vorhergehenden Ansprüche,
**dadurch gekennzeichnet, dass** die Durchlauf-Anlage (3) mindestens ein Druckwerk (7) und ein nachfolgendes Lackwerk (8) aufweist, und wobei das ggf. letzte Druckwerk (7) einen ersten Klebstoff (4A), und das Lackwerk (8) einen zweiten Klebstoff (4B) jeweils mindestens einseitig auf das Papier (2) aufbringt.

7. Verfahren nach einem der vorhergehenden Ansprüche,
**dadurch gekennzeichnet, dass** der Stapel (6) während und/oder nach dem Zusammenpressen aushärten gelassen wird, so dass weiterverarbeitbares Plattenmaterial (6) aus dünnem Papier (2) erhalten wird.

8. Verfahren nach Anspruch 7,
**dadurch gekennzeichnet, dass** nach dem Aushärten eine Veredelung des Plattenmaterials (1) mittels Ölens, Lackierens oder Laminierens erfolgt.

9. Plattenmaterial (1) aus dünnem Papier (2),
**dadurch gekennzeichnet, dass** das Plattenmaterial (1) mittels eines Verfahrens gemäß Definition in einem der vorhergehenden Ansprüche hergestellt worden ist.

10. Gegenstand aus Plattenmaterial (1) nach Anspruch 9,
**dadurch gekennzeichnet, dass** der Gegenstand ein Wohnmöbel, ein Sanitärmöbel, ein Küchenmöbel, ein Schlafmöbel, ein Bodenbelag, ein Deckenelement, ein Wandelement, eine Fensterbank, ein Dekorationsartikel, ein Wärmedämmelement, oder ein Schalldämmelement ist.

11. Anlage (3) zur Durchführung eines Verfahrens gemäß Definition in einem der Ansprüche 1 bis 8, umfassend eine Transportvorrichtung (9) zum Transportieren von Papier (2) durch die Anlage (3) sowie mindestens ein Druckwerk (7, 7') zum mindestens einseitigen Aufbringen von Farbe auf das Papier (2),
**dadurch gekennzeichnet, dass** die Anlage mindestens ein Reservoir für einen Klebstoff (4A, 4B) aufweist, welcher ebenfalls mindestens einseitig auf das Papier (2) auftragbar ist.

12. Anlage (3) nach Anspruch 11,
**dadurch gekennzeichnet, dass** das mindestens eine Reservoir ein Druckwerk (7, 7') oder Lackwerk (8) ist.

13. Anlage (3) nach einem der Ansprüche 11 oder 12,
**dadurch gekennzeichnet, dass** die Anlage (3) ferner eine Schneidvorrichtung zum Schneiden des Papiers (2) in Bögen (2B) und/oder eine Pressvorrichtung (10) zum Zusammenpressen der mit Klebstoff versehenen Papierbögen (2B) umfasst.

## Claims

1. Method of producing panel material (1) from thin paper (2), wherein the paper (2) is present on rolls (2A) or in sheets (2B), comprising the steps
- provision of the paper (2) in roll (2A) or sheet (2B) form,
- supplying the paper (2) to an installation (3) suitable for taking up and transporting the paper (2),
- taking up of the paper (2) by the installation (3),
- transporting of the paper (2) through the installation (3),
- planar application of adhesive (4A, 4B) to at least one side of the paper (2) while it is being transported,
- possibly cutting of the paper (2) into sheets (2B) so that paper sheets, to at least one side of which adhesive (4A, 4B) has been applied, are provided, which at the end of transportation are stacked on top of each other, wherein the stack (6) of paper sheets (5) provided with adhesive is pressed together through pressure (P), and as the installation (3) envisaged for implementing the method a conveyor system provided with ink(s) for the printing of paper (2) is used.

2. Method according to claim 1
**characterised in that** the conveyor installation (3) used is a offset printing machine, a flexo printing machine, a roll offset machine, a laminating machine or a book printing machine.

3. Method according to claim 1 or 2
**characterised in that** the paper sheets (5) provided with adhesive are pressed together by means of a pressing device.

4. Method according to claim 1 or 2
**characterised in that** the paper sheets (5) provided with adhesive are pressed together between a positive and a negative mould.

5. Method according to any one of the preceding claims
**characterised in that** the thin paper (2) is entirely or partially unprinted or printed.

6. Method according to any one of the preceding claims
**characterised in that** the conveyor installation (3) comprises at least one printing mechanism (7) and a following coating mechanism (8) and wherein the, possibly, last printing mechanism (7) applies a first adhesive (4A), and the coating mechanism (8) applies a second adhesive (4B), in each case at least on one side of the paper (2).

7. Method according to any one of the preceding claims
**characterised in that** during and/or after pressing together the stack (6) is left to harden so that panel material (6) of thin paper (2) that can be processed further is obtained.

8. Method according to claim 7
**characterised in that** after hardening, refining of the panel material (1) by way of oiling, coating or laminating takes place.

9. Panel material (1) of thin paper (2)
**characterised in that** the panel material (1) is produced in accordance with the definition in any one of the preceding claims.

10. Object made of panel material (1) according to claim 9
**characterised in that** the object is a piece of living room furniture, bathroom furniture, kitchen furniture, bedroom furniture, a floor covering, a ceiling element, a windowsill, a decorative article, a thermal insulation element or a sound insulation element.

11. Installation (3) for carrying out a method according to the definition in any one of claims 1 to 8 comprising a transporting device (9) for transporting paper (2) through the installation (3) as well as at least one printing mechanism (7, 7') for the at least one-sided application of ink to the paper (2), **characterised in that** the installation comprises at least one reservoir for an adhesive (4A, 4B), which can also be applied on at least one side of the paper (2) .

12. Installation (3) according to claim 11
**characterised in that** the at least one reservoir is a printing mechanism (7, 7') or coating mechanism (8).

13. Installation (3) according to any one of claims 11 or 12,
**characterised in that** the installation (3) also comprises at cutting device for cutting the paper (2) into sheets (2B) and/or a pressing device (10) for pressing together the paper sheets (2B) provided with adhesive.

## Revendications

1. Procédé destiné à fabriquer du matériau en panneaux (1) en papier (2) mince, le papier (2) se présentant sur des rouleaux (2A) ou en feuilles (2B), comportant les étapes
- de la mise à disposition du papier (2) sous forme de rouleaux (2A) ou de feuilles (2B),
- de la présentation du papier (2) devant une installation (3) adaptée pour reprendre et pour transporter le papier (2),
- de la reprise du papier (2) au moyen de l'installation (3),
- du transport du papier (2) à travers l'installation (3),
- de l'application en nappe d'agent adhésif (4A, 4B) sur au moins une face du papier (2) pendant le transport,
- le cas échéant, de la coupe du papier (2) en feuilles (2B),
de sorte à mettre à disposition des feuilles de papier (5) munies d'agent adhésif (4A, 4B) sur au moins une face, que l'on empile en fin de transport, la pile (6) obtenue par l'empilage des feuilles de papier (5) munies d'agent adhésif étant compressée au moyen de pression (P) et en tant que l'installation (3) prévue pour la réalisation du procédé, une ligne en continu destinée à imprimer du papier (2) avec de l'encre (des encres) étant utilisée.

2. Procédé selon la revendication 1,
**caractérisé en ce que** la ligne en continu (3) utilisée est une machine d'impression offset, une machine d'impression flexographique, une presse rotative offset, une lamineuse ou une presse à imprimer les livres.

3. Procédé selon la revendication 1 ou 2,
**caractérisé en ce qu'**on compresse les feuilles de papier (5) munies d'agent adhésif au moyen d'un dispositif presseur lisse.

4. Procédé selon la revendication 1 ou 2,
**caractérisé en ce qu'**on compresse les feuilles de papier (5) munies d'agent adhésif entre un moule positif et un moule négatif.

5. Procédé selon l'une quelconque des revendications précédentes,
**caractérisé en ce que** le papier (2) mince est entièrement ou partiellement vierge ou imprimé.

6. Procédé selon l'une quelconque des revendications précédentes,
caractérisé en ce la ligne en continu (3) comporte au moins une unité d'impression (7) et unité de peinture (8) successive, et l'éventuelle dernière unité d'impression (7') applique un premier agent adhésif (4A), et l'unité de peinture (8) applique un deuxième agent adhésif (4B) chaque fois au moins sur une face du papier (2).

7. Procédé selon l'une quelconque des revendications précédentes,
**caractérisé en ce qu'**on laisse durcir la pile (6) pendant et/ou ou après la compression, de sorte à obtenir du matériau en panneaux (6) de papier (2) mince susceptible d'être réusiné.

8. Procédé selon la revendication 7,
**caractérisé en ce qu'**après le durcissement, on procède à une finition du matériau en plaque (1) par huilage, peinture ou laminage.

9. Matériau en panneaux (1) en papier (2) mince,
**caractérisé en ce que** le matériau en panneaux (1) a été fabriqué au moyen d'un procédé tel que défini dans l'une quelconque des revendications précédentes.

10. Objet en matériau en panneaux (1) selon la revendication 9,
**caractérisé en ce que** l'objet est un meuble d'habitat, un meuble sanitaire, un meuble de cuisine, un meuble de couchage, un revêtement de sol, un élément de plafond, un élément de paroi, un appui de fenêtre, un article décoratif, un élément isolant thermique ou un élément insonorisant.

11. Installation (3) destiné à réaliser un procédé tel que défini dans l'une quelconque des revendications 1 à 8, comprenant un dispositif de transport (9) pour transporter du papier (2) à travers l'installation (3), ainsi qu'au moins une unité d'impression (7, 7') pour l'application de couleur sur au moins une face du papier (2),
**caractérisée en ce que** l'installation comporte au moins un réservoir pour un agent adhésif (4A, 4B), lequel également peut être appliqué sur au moins une face du papier (2).

12. Installation (3) selon la revendication 11,
**caractérisée en ce que** l'au moins un réservoir est une unité d'impression (7, 7') ou une unité de peinture (8) .

13. Installation (3) selon l'une quelconque des revendications 11 ou 12,
**caractérisée en ce que** l'installation (3) comporte par ailleurs un dispositif de coupe pour couper le papier (2) en feuilles (2B) et/ou un dispositif presseur (10) pour compresser les feuilles de papier (2B) munies d'agent adhésif.
